# EUROPEAN PATENT SPECIFICATION

(11) **EP 3 302 141 B1**
(45) Date of publication and mention of the grant of the patent: **27.02.2019**
(21) Application number: 16736256.5
(22) Date of filing: 11.05.2016
(51) Int. Cl.: A43B 13/12, A43B 13/14, A43B 13/18, A43B 23/02, A43B 9/00, A43B 13/22

(54) **ELEMENT FOR REALIZING AN ASSEMBLED FOOTWEAR WITH PRE-FORMED PARTS AND A RELATED FOOTWEAR**
ELEMENT ZUR REALISIERUNG EINES ZUSAMMENGESETZTEN SCHUHWERKS MIT VORGEFORMTEN TEILEN UND ZUGEHÖRIGES SCHUHWERK
ÉLÉMENT PERMETTANT DE RÉALISER UNE CHAUSSURE ASSEMBLÉE AVEC DES PIÈCES PRÉ-FORMÉES ET CHAUSSURE ASSOCIÉE

(30) Priority: 28.05.2015 IT UB20151119
(43) Date of publication of application: 11.04.2018
(73) Proprietor: Tasci S.r.l., 38068 Rovereto (IT); MACPI S.p.A. PRESSING DIVISION, 25036 Palazzolo Sull'Oglio (Brescia) (IT)
(72) Inventor: GIORDANI, Roberto, 38068 Rovereto (TN) (IT); CARTABBIA, Giovanni, 25036 Palazzolo S/O (BS) (IT)
(74) Representative: Burchielli, Riccardo
(86) International application number: PCT/IT2016/000124
(87) International publication number: WO 2016/189559

(56) References cited:
- US-A1- 2004 111 920
- US-A1- 2007 062 069
- US-A1- 2007 277 401
- US-A1- 2014 325 871

## Description

The present invention relates to an assembled footwear with pre-formed parts.

More particularly, the invention relates to a footwear and parts of it, which can be obtained starting from a load-bearing reticular structure, on which pre-formed parts forming the upper are successively placed.

Preferably, according to the invention, said parts can be held together through gluing systems by means of hot/cold technique or by means of seams or heat seals.

Nowadays, many methods for assembling a footwear are known and many footwear made with said methods are also known, according to which parts are generally produced, so as to cover different areas of the foot, and said parts are joined together by means of seams.

The conventional stitching, in addition to requiring high costs and long times, due to the required labor, often goes to add weight and thickness in some areas of the footwear, thus causing an uncomfortable use for the user.

Furthermore, as the sports shoes often requires technical, light and/or breathable materials, said materials are not always suitable to be treated with a conventional stitching.

An assembled footwear with pre-formed parts having the technical features of the preamble of the enclosed claim 1 is known for example from US2014/325871A1.

In the context of the above mentioned requirements, therefore, an object of the present invention is to obviate the above-mentioned technical drawbacks and, specifically, to provide elements of a shoe assembled with pre-formed parts and a related high comfort footwear, which allows to obtain a high breathability, safeguarding, at the same time, the integrity of the shoe in its function and the life of said shoe and ensuring an appropriate comfort to the foot of the user even for long times.

Another object of the present invention is to provide elements of a footwear assembled with pre-formed parts and a related footwear, which may be used for any type of footwear and, in particular, for sports shoes. Another object of the present invention is to provide elements of a footwear assembled with pre-formed parts and a related footwear which can be manufactured at low costs with respect to the advantages achieved.

A further object of the present invention is to provide elements of a footwear assembled with pre-formed parts, which allow to obtain a comfortable and flexible footwear, especially during the user's walking, while maintaining a stiffness and safe structure and ensuring a high thermal insulation.

The above mentioned and other objects which will become more clear in the following are achieved by an element of an assembled footwear with pre-formed parts according to the enclosed claim 1; preferred embodiments are disclosed in the other claims.

The invention relates to an element for realizing a footwear comprising a supporting frame and at least one pre-formed part configured to be coupled to said frame. In this way it is possible to realize pre-formed elements in standard sizes and adapt said elements to a frame made to measure.

The bearing framework comprises a shaped reticular structure around a suitable form, thus greatly reducing the weight of the footwear.

Furthermore and advantageously, the pre-formed part may also include a liner and/or a waterproof membrane, which is able to increase the comfort in use of the footwear.

In any case, a supporting frame is provided equipped with at least one hole, in order to not only lighten the structure of the footwear, but also to increase its flexibility.

A first pre-formed outer part is equipped with protruding elements facing towards the opposite direction with respect to the frame and positioned in correspondence of the one or more first holes of the bearing frame. In this way, in fact, it is possible that said protruding elements are adapted to external stresses without exerting pressure on the frame. For example, the protruding elements are able to fall into the hole, independently of each other, so as to adapt the sole to any irregularities of the ground.

A second inner pre-formed part is also provided having protruding elements that fit inside the holes of the bearing frame, with substantially the same advantage.

In particular, the second part exerts a lower elastic resistance with respect to the resistance of the bearing frame, thus softening the movements and increasing the comfort during walking.

According to the invention, one or more reinforcing lines adapted to advantageously increase the strength and the protection of the foot during walking are provided on the bearing frame.

The first outer pre-formed part is equipped with one or more second holes positioned in correspondence of said one or more reinforcing lines of the bearing frame, so as to increase the flexibility of the footwear, while maintaining the protection of the foot from external stresses.

Still according to the invention, it is possible to couple the pre-formed part to the bearing frame by means of supports made of microfiber or of another equivalent material, which confers a great stability to the structure, while maintaining the suitable flexibility.

The invention also relates to footwear comprising an element as specified in appended claim 1 for realizing a footwear, with the advantages already mentioned.

Further characteristics and advantages of the elements of an assembled footwear with pre-formed parts, according to the present invention, will be more clear from the following description, with reference to preferred embodiments, and from the enclosed drawings, in which:
- figure 1 shows in exploded view a footwear made with the elements of the invention, according to a first embodiment of the invention;
- figure 2 shows the footwear of figure 1;
- figure 3 shows a first part of an element of the invention, according to a second embodiment of the invention;
- figure 4 shows a second part of an element of the invention, according to the second embodiment of the invention;
- figure 5 shows a front view of the element of the invention, according to the second embodiment of the invention, in which the first part of figure 3, the second part of figure 4 and a third part are shown;
- figure 6 shows a first side view of the element of figure 5;
- figure 7 shows a second side view of the element of figure 5;
- figure 8 shows a bottom view of the element of figure 5;
- figure 9 shows a cross-section view of the element of figure 5 in a rest position;
- figure 10 shows a cross-section view of the element of figure 5 in a rest position;
- figure 11 shows a top view of the element of figure 5.

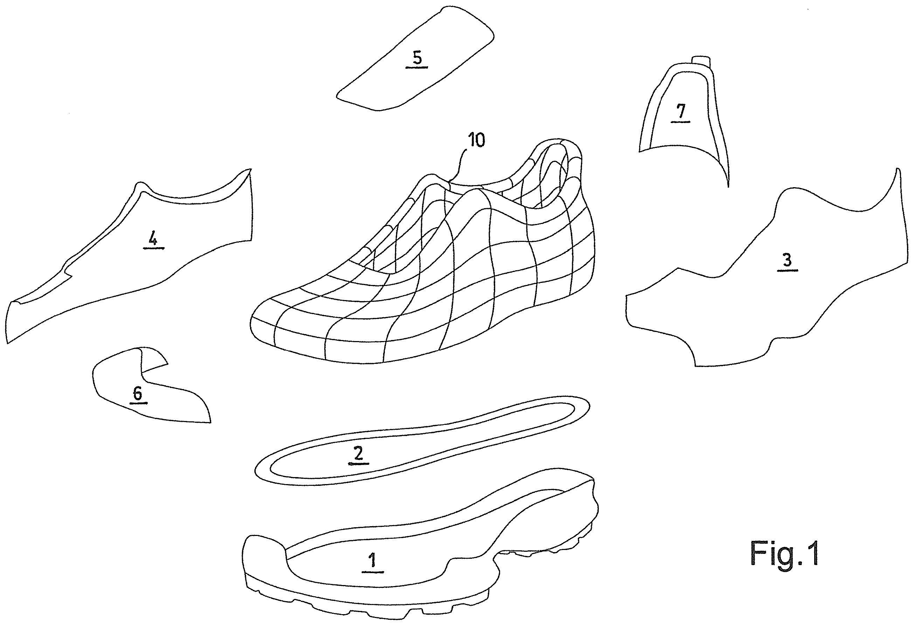

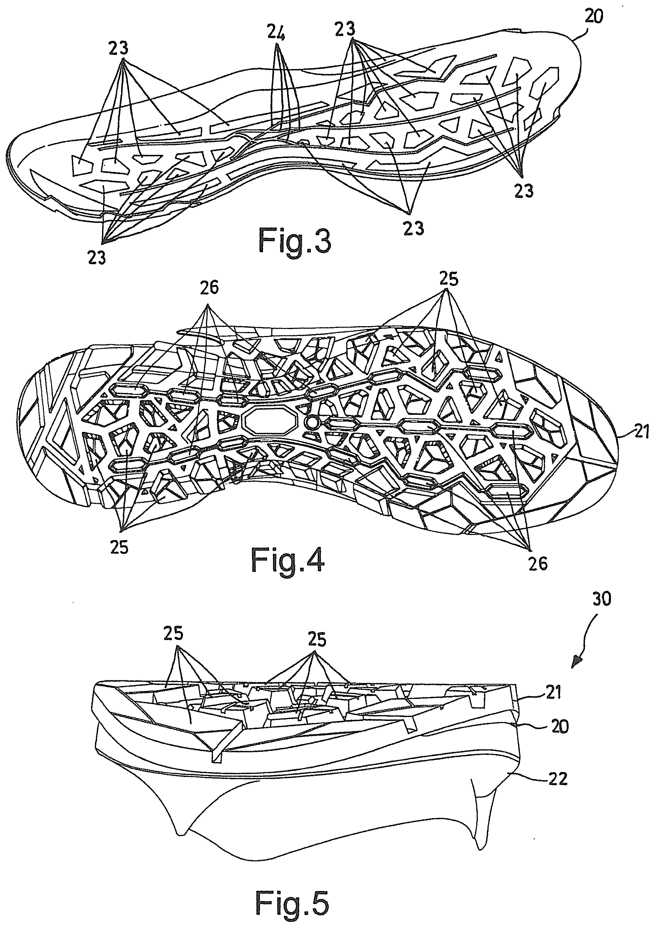

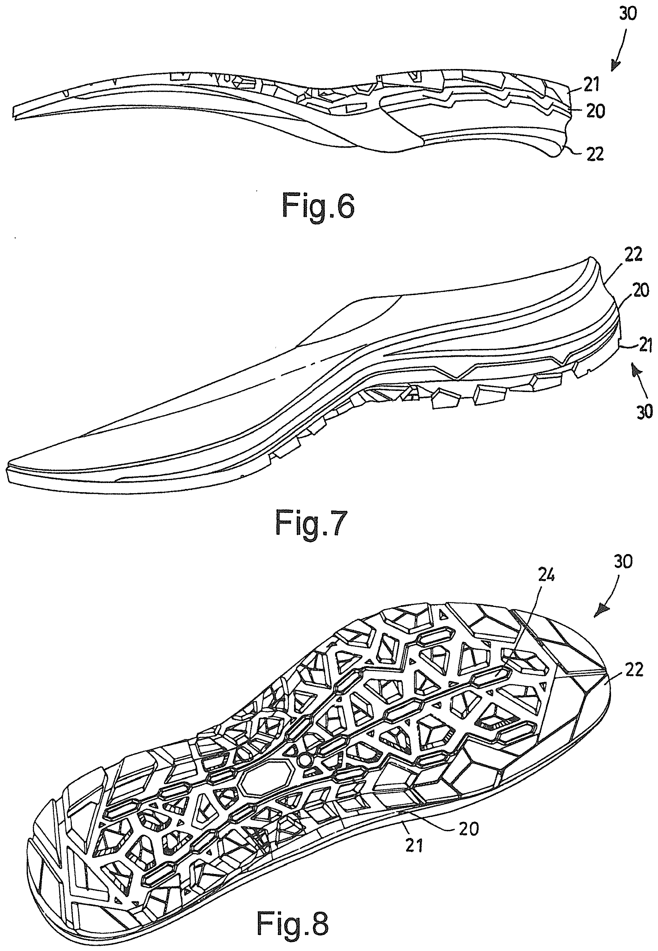

With reference to the above mentioned figures, the invention comprises the following aspects, starting from the creation of a product consisting of a supporting or bearing frame 10 (figure 1), 20 (figures 3-11) wrapped by the thermoformed components or parts 1, 2, 3, 4, 5, 6, 7 (figures 1-2), 21, 22 (figures 3-11) which constitute the upper or the sole 30.

In particular, thanks to the use of a supporting frame, for example a shaped reticular structure 10, 20 formed ergonomically around a suitable shaping definable from time to time, such as the foot of a user scanned by a 3D scanner and reproduced exactly for a footwear tailored with modern technologies or such as the forms of a standard foot employed to simulate the different sizes, it is possible to apply functionalizing elements, such as a lining and/or a waterproof membrane (not shown) by means of sewing or gluing at the top or at the bottom of the bearing frame 10, 20.

In detail, for example, said reticular structure 10, which is technically called with the name of "sock", can be constituted by synthetic textile semi-flexible, semi-rigid, plastic or thermoplastic elements, or by a suitable synthetic structure made by molding or similar techniques (such as 3D printing), suitable to wrap around the foot.

The application of functional elements, such as lining or multifunctional membranes (waterproof, breathable, thermo-insulating, antibacterial membranes), can take place by gluing or sewing said membranes in the upper part or in the lower part of the frame.

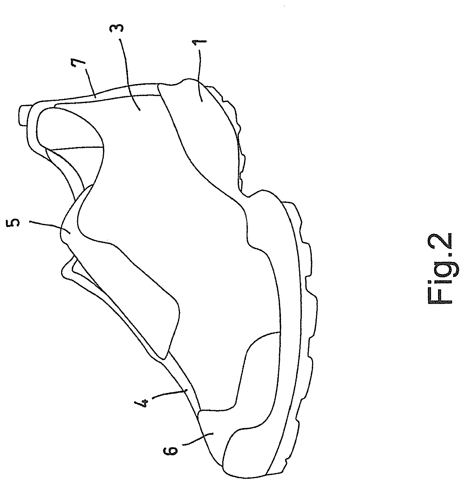

With reference to figures 1 and 2, each element of the upper, such as the sole 1, the midsole 2, the left flank 3, the right side 4, the upper part or tab 5, the ferrule 6 and the heel 7, can be made of leather or other textile, synthetic, artificial or natural materials, which are coupled to the surface of the reticular structure 10 facing towards the outside, by means of suitable adhesives and/or supports made of microfiber, such as non-woven fabrics or fake leather, suitable to give a great support to the element constituting the upper.

With reference to figures 3-11, also the combination between the components of the midsole and/or of the sole can be made by gluing, stitching or coupling techniques and taking advantage of the adhesives crystallization method known as "HOT/COLD", through the use of specific thermo-adhesive glues.

According to a preferred embodiment of the invention, which is shown in figures from 3 to 11, the shaped reticular structure 20 is made of a material with high wear resistance, high abrasion resistance, high tensile and tear strength, good damping capacity and good flexibility at low temperatures, as well as high resistance to oils, greases, oxygen and ozone.

For example, said material could be a thermoplastic polyurethane (TPU). Said reticular structure 20 is coupled to a lower protection element 21 made of rubber and to a higher ergonomic element 22 made of a softer material, for example ethylene vinyl acetate (EVA).

The reticular structure 20 has a series of holes 23 and reinforcement lines 24.

The lower protection element 21 made of rubber has protruding elements 25, facing towards the opposite direction with respect to the reticular structure 20, and/or holes 26.

The protruding elements 25 of the lower protection element 21 are positioned in correspondence of the holes 23 of the reticular structure 20, and/or the holes 26 of the lower protection element 21 are positioned in correspondence of the reinforcing lines 24.

In this way, advantageously, the protruding elements 25 are able to adapt the sole to the irregularities of the ground, keeping the comfort for the user.

The particular combination of the reticular structure 20, the bottom protection element 21 made of rubber and the upper ergonomic element 22 allows that each protruding element 25 could go back independently of the other adjacent elements, only with the resistance of the upper ergonomic element 22, which is made of a soft material so as to oppose little resistance and allow a slight movement of said elements.

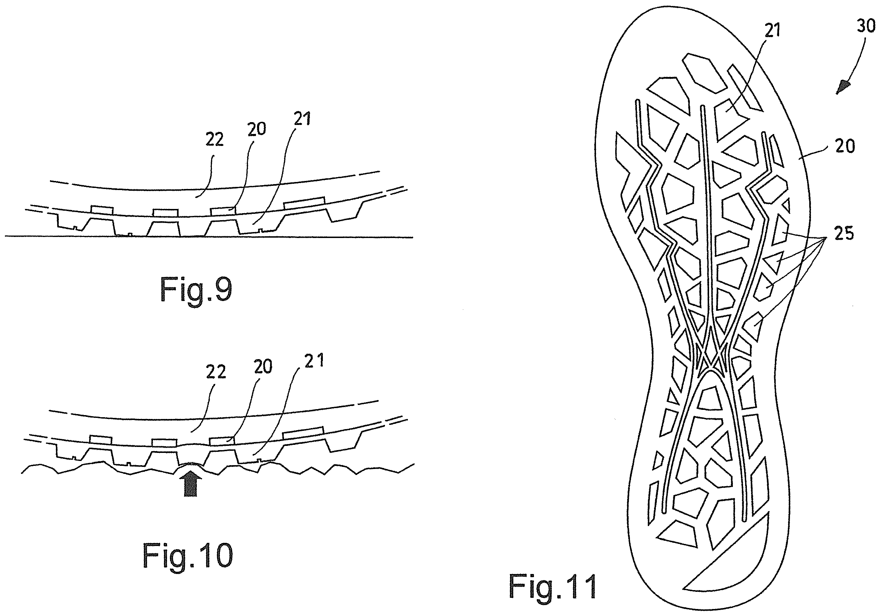

As can be seen from figures 9 and 10, preferably, the ergonomic element 22 is configured so as to adapt to the shaping of the reticular structure 20 and to fill all said holes 23. In other words, the cross-section views of figure 9 and 10 show how the ergonomic element 22 has a complementary shape with respect to the shape of the reticular structure 20, which is equipped with protruding elements corresponding to the holes of said reticular structure 20.

In detail, the individual pre-formed components or parts 1, 2, 3, 4, 5, 6, 7, 21, 22 can be applied to the reticular structure 10, 20 by gluing, sewing or coupling techniques exploiting the adhesives crystallization method known as "HOT/COLD", or through the use of specific thermo-adhesive glues. Thanks to the winding of the pre-formed components 1, 2, 3, 4, 5, 6, 7, 21, 22 around the reticular structure 10, 20 and thanks to the whole assembly among said pre-formed components, it is possible to obtain the footwear 30 assembled from pre-formed parts as shown in figure 2.

Furthermore, by means of a thermoforming process and thanks to the adoption of specific male-female molds at certain pressure and temperature values, a desired pre-bending (or pre-forming) of the single parts 1, 2, 3, 4, 5, 6, 7 is obtained.

Finally, the invention thus conceived is susceptible to numerous modifications and variants, all falling within the scope of the attached claims.

In particular, the footwear thus obtained can have a different number of layers, ensuring the same way said desired features of comfort.

Finally, the materials employed, as well as the dimensions may be any according to requirements and the state of the art.

Where the features and techniques mentioned in any claim are followed by reference signs, those reference signs have been included for the sole purpose of increasing the intelligibility of the claims and accordingly said reference signs do not have any limiting effect on the interpretation of each element identified by way of example by said reference signs.

## Claims

1. Element for realizing a footwear comprising a supporting frame (20) which comprises a reticular structure shaped around a suitable object and which has one or more first holes (23), and at least one thermo-formed member (1, 2, 3, 4, 5, 6, 7; 21, 22) configured to be coupled with the supporting frame (20) for realizing the sole of said footwear, wherein a first pre-shaped external member (21), configured to be coupled to said supporting frame (20) for realizing the sole of said footwear, is equipped with protruding elements (25) facing to the direction opposed to the supporting frame (20) and placed in correspondence with said one or more first holes (23) of said supporting frame (20) and a second pre-shaped internal member (22) is equipped with protruding elements which may be inserted within said one or more first holes (23) of said supporting frame (20) **characterized in that** said supporting frame (20) has one or more reinforcement lines (24) and said first pre-shaped external member (21) is equipped with one or more second holes (26) placed in correspondence with said one or more reinforcement lines (24) of said supporting frame (20).

2. Element for realizing a footwear according to claim 1, **characterized in that** said member (1, 2, 3, 4, 5, 6, 7; 21, 22) comprises a liner and/or a waterproof membrane.

3. Element for realizing a footwear according to one of the previous claims, **characterized in that** said member (1, 2, 3, 4, 5, 6, 7; 21, 22) is coupled with said supporting frame (20) by means of microfiber supports.

4. Footwear comprising an element for realizing a footwear according to one of the claims 1-3.

## Patentansprüche

1. Element zur Gestaltung eines Schuhwerks, umfassend einen Stützrahmen (20), welcher eine retikuläre Struktur umfasst, die um ein geeignetes Objekt geformt wird, und die ein oder mehrere erste Löcher (23) aufweist, und mindestens ein warmgeformtes Teil (1, 2, 3, 4, 5, 6, 7; 21, 22), das konfiguriert ist, um zur Gestaltung der Sohle des Schuhwerks mit dem Stützrahmen (20) gekoppelt zu werden,
wobei ein erstes vorgeformtes äußeres Teil (21), das konfiguriert ist, um zur Gestaltung der Sohle des Schuhwerks mit dem Stützrahmen (20) gekoppelt zu werden, mit vorspringenden Elementen (25) ausgestattet ist, die in die zum Stützrahmen (20) entgegengesetzte Richtung weisen, und entsprechend dem einen oder den mehreren ersten Löchern (23) des Stützrahmens (20) platziert sind, und ein zweites vorgeformtes inneres Teil (22) mit vorspringenden Elementen ausgestattet ist, die in das eine oder die mehreren ersten Löcher (23) des Stützrahmens (20) eingeführt werden können, **dadurch gekennzeichnet, dass** der Stützrahmen (20) eine oder mehrere Verstrebungslinien (24) aufweist, und das erste vorgeformte äußere Teil (21) mit einem oder mehreren zweiten Löchern (26) ausgestattet ist, die entsprechend der einen oder den mehreren Verstrebungslinien (24) des Stützrahmens (20) platziert sind.

2. Element zur Gestaltung eines Schuhwerks nach Anspruch 1, **dadurch gekennzeichnet, dass** das Teil (1, 2, 3, 4, 5, 6, 7; 21, 22) eine Einlage und/oder eine wasserdichte Membran umfasst.

3. Element zur Gestaltung eines Schuhwerks nach einem der vorstehenden Ansprüche, **dadurch gekennzeichnet, dass** das Teil (1, 2, 3, 4, 5, 6, 7; 21, 22) anhand von Mikrofaserstützen mit dem Stützrahmen (20) gekoppelt ist.

4. Schuhwerk, ein Element zur Gestaltung eines Schuhwerks nach einem der Ansprüche 1 bis 3 umfassend.

## Revendications

1. Elément pour réaliser une chaussure comprenant un cadre de support (20) qui comporte une structure réticulaire formée autour d'un objet approprié et qui présente un ou plusieurs premiers trous (23), et au moins un élément thermoformé (1, 2, 3, 4, 5, 6, 7 ; 21, 22) conçu pour être accouplé au cadre de support (20) pour réaliser la semelle de ladite chaussure,
dans lequel un premier élément externe préformé (21), conçu pour être accouplé audit cadre de support (20) pour réaliser la semelle de ladite chaussure, est équipé d'éléments en saillie (25) faisant face à la direction opposée au cadre de support (20) et placés en correspondance avec lesdits un ou plusieurs premiers trous (23) dudit cadre de support (20) et un second élément interne préformé (22) est équipé d'éléments en saillie qui peuvent être insérés à l'intérieur desdits un ou plusieurs premiers trous (23) dudit cadre de support (20), **caractérisé en ce que** ledit cadre de support (20) possède une ou plusieurs lignes de renforcement (24) et ledit premier élément externe préformé (21) est équipé de un ou plusieurs seconds trous (26) placés en correspondance avec lesdites une ou plusieurs lignes de renforcement (24) dudit cadre de support (20).

2. Elément pour réaliser une chaussure selon la revendication 1, **caractérisé en ce que** ledit élément (1, 2, 3, 4, 5, 6, 7 ; 21, 22) comprend une doublure et/ou une membrane étanche à l'eau.

3. Elément pour réaliser une chaussure selon l'une des revendications précédentes, **caractérisé en ce que** ledit élément (1, 2, 3, 4, 5, 6, 7 ; 21, 22) est accouplé audit cadre de support (20) au moyen de supports microfibres.

4. Chaussure comprenant un élément pour réaliser une chaussure selon l'une des revendications 1 à 3.
